# EUROPEAN PATENT SPECIFICATION

(11) **EP 1 237 426 B1**
(45) Date of publication and mention of the grant of the patent: **11.02.2004**
(21) Application number: 00980117.6
(22) Date of filing: 10.11.2000
(51) Int. Cl.: A23N 15/04

(54) **ORIENTATION MECHANISM**
AUSRICHTUNGSMECHANISMUS
MECANISME D'ORIENTATION

(30) Priority: 10.11.1999 NL 1013539
(43) Date of publication of application: 11.09.2002
(73) Proprietor: Nederlandse Organisatie voor Toegepast-Natuurwetenschappelijk Onderzoek TNO, 2628 VK Delft (NL)
(72) Inventor: VIS, Andreas, Gerardus, NL-2713 EJ Zoetermeer (NL)
(74) Representative: Prins, Adrianus Willem
(86) International application number: PCT/NL2000/000823
(87) International publication number: WO 2001/033981

(56) References cited:
- NL-A- 9 301 363
- NL-C- 1 008 841
- US-A- 3 838 292

## Description

The present invention relates to an orientation mechanism, in particular for orienting objects whose surface comprises at least a concave portion and at least a projecting or bulging portion, such as mushrooms, pears, onions, flower bulb and the like, provided with an endless conveying member, comprising a number of mutually adjacent conveying elements formed by rollers arranged transversely to the conveying direction, spaced apart a specific distance one behind the other and movable in the conveying direction, which can be moved so that objects placed on the conveying member can be oriented, while, further, separate carriers are present for supporting objects oriented and to be oriented.

Such orientation mechanism is known from Dutch patent application NL-A-10.08841 and relates in particular to orienting mushrooms. For mushrooms, it proves to be possible with this known orientation mechanism, in practice, to orient about 85-90% of the mushrooms in such a manner that they have their caps resting on the carriers and their stipes down between the carriers, so that they can easily be subjected to further treatments, for instance cutting off the bases. Presently, however, the requirements are much higher: at least 95% of the mushrooms must be oriented on the carrier with their stipes down.

To achieve an improved orientation of the mushrooms and meet this requirement entirely or at least almost entirely, the orientation mechanism according to the invention is characterized in that in the conveying direction, outside the range of the conveying member, one or more groups of two brush-shaped elements are present above the carriers, wherebetween the objects, in particular mushrooms, can be moved, in contact therewith.

In particular, a carrier is formed by a pair of ropes, belts or the like that are movable in the conveying direction and wherebetween the objects in suspended position can be supported, and the brush-shaped elements being arranged on either side of the ropes, belts or the like, spaced apart a distance which is less than the largest diameter of the objects. For mushrooms, the mutual distance between the brush-shaped elements will be less than the diameter of the cap of the mushrooms.

When several carriers are present, to realize a mechanism which is as compact as possible and, in that case, to have the carriers extend next to each other as closely as possible, juxtaposed groups of brush-shaped elements are staggered in the conveying direction.

A favorable result proves to be obtained when the brush-shaped elements are motor-drivable and have a peripheral velocity higher than the speed of travel of the carriers, in particular 2-10% higher.

Moreover, to enable to improve the orientation of the objects even further, tilting pins may be arranged on either side of a carrier, in the conveying direction upstream of the brush-shaped elements. In particular, these tilting pins are inclined upwards in the conveying direction. To prevent obstructions of objects on the carriers, it is favorable when the distance between an end of the tilting pins and the brush-shaped elements is greater than the largest diameter of the objects. Further, to prevent objects from possibly getting stuck between the tilting pins, it is preferred that the tilting pins be staggered in the conveying direction.

In particular when the mechanism is suitable for processing mushrooms, a cutting member can be provided in the conveying direction, downstream of the brush-shaped elements, for cutting off portions of the oriented mushrooms which project downwards too far. In that case, the distance between the brush-shaped elements and the cutting member is preferably such that the objects oriented by the brush-shaped elements have come to a resting position on the carriers, before they are subjected to a cutting treatment.

In a favorable embodiment, the cutting member is formed by two partially overlapping, serrated or toothed, motor-driven circular disk-shaped cutters. Preferably, the cutters are driven so that their peripheral velocity is higher than the speed of travel of the carriers.

The invention will presently be specified with reference to the accompanying drawings. In these drawings:
Fig. 1 shows a schematic arrangement of an automatic mushroom processing apparatus according to the invention;
Fig. 2 is a top plan view of a part of the orientation mechanism present therein;
Fig. 3 is a side elevation of a part of this orientation mechanism;
Figs. 4A-4E show a number of oriented positions of a mushroom on the hourglass-shaped rollers of the orientation mechanism;
Fig. 5 shows a mushroom to be oriented on said hourglass-shaped rollers;
Fig. 6 shows a longitudinal section of an hourglass-shaped roller;
Fig. 7 schematically shows a part of the conveying member of the orientation mechanism;
Fig. 8 is a top plan view of that portion of a carrier where the brush-shaped elements and the tilting pins are arranged;
Figs. 9A, 9B show the brush-shaped elements in bottom view and, viewed in the conveying direction, in side elevation; and
Fig. 10 is an enlarged representation of the portion shown in Fig. 8, with the tilting pins, however, in side-by-side arrangement.

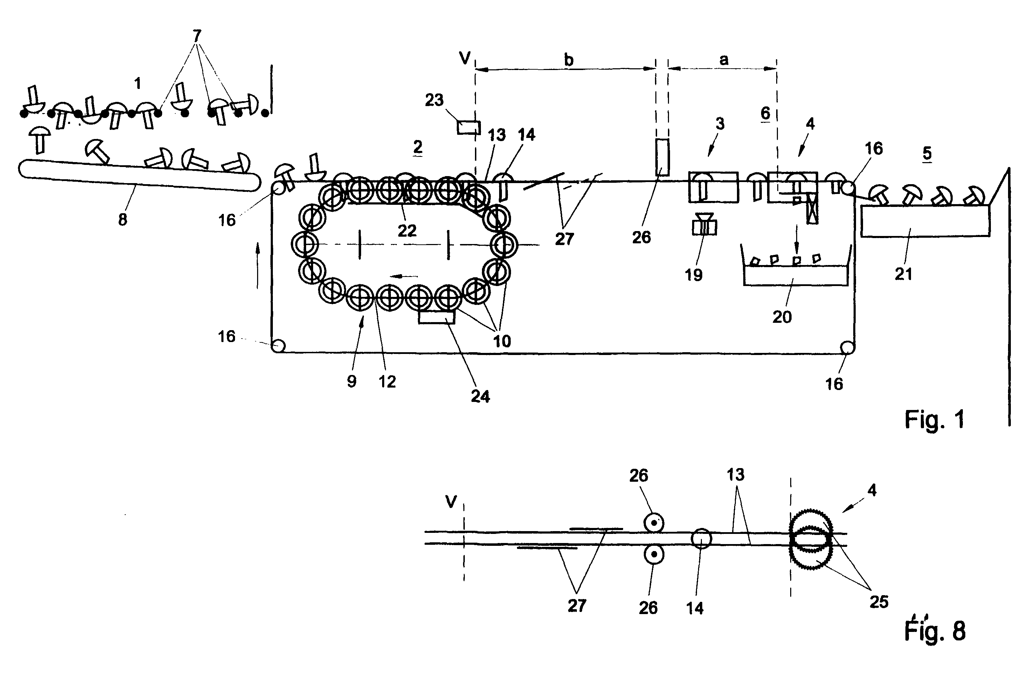

The apparatus shown schematically in Fig. 1 comprises a supplying member (not shown), a sorting member 1, an orientation mechanism 2, an inspection member 3, a cutting member 4 and a discharging member 5. The inspection member and the cutting member constitute a mushroom processing member 6.

The sorting member 1 is suitable for selecting mushrooms according to size. All sorts of known and suitable sorting members can be used herefor. A suitable sorting member is described in NL-A-10.11734. Further, use can be made of the principle of mutually diverging ropes located in a horizontal plane, in Fig. 1 perpendicular to the plane of the drawing; in Fig. 1, these ropes are designated by reference numeral 7. The mushrooms are moved onto the ropes and depending on the interspace between the ropes and the size of the mushrooms, these mushrooms will at a particular place fall between the ropes and end up on a conveyor 8. In a practical arrangement, such orientation mechanism is present for various size categories of mushrooms. Also, in the case of a substantial supply of mushrooms having more or less the same size, several orientation mechanisms may be present. In principle, all these orientation mechanisms, adjusted or not adjusted to the same mushroom size, are arranged in mutually parallel relationship, parallel to the plane of the drawing. However, the present description will be limited to a so-called one-track machine, i.e. a machine having a single orientation mechanism. It will, however, be understood that in practice, multi-track machines will be employed.

The heart of the orientation mechanism is formed by a circulating, endless conveying member 9. This conveying member 9 is substantially built up from conveying elements formed by hourglass-shaped rollers 10 that are connected in parallel one behind the other and that are spaced apart so that the space centrally between two adjacent rollers is on the one hand sufficiently large for the stipes of mushrooms to fit therebetween, and on the other sufficiently narrow to prevent the caps of the mushrooms from fitting therebetween as well and hence to prevent the mushrooms from falling between the rollers. The rollers 10 have their shaft-shaped ends 11 accommodated in circular chains or toothed belts 12. The upper rollers, traveling forwards in conveying direction, are wholly or partially supported by a fixedly arranged flat surface 22 formed by, for instance, a plate-shaped body or by strip-shaped bodies. By driving the entire train of rollers by a motor, the upper rollers 10 contacting this flat surface 22 are rotated individually through friction with this surface. However, it is also possible to use a motor-driven belt instead of this fixedly arranged surface 22, so that the rollers are rotated by moving this driven belt along them, in contact therewith.

The hourglass-shaped rollers are manufactured from a synthetic material, such as rubber or PVC, and can, when the apparatus is in operation and this is desired, be held in a wet state by means of, for instance, a spraying apparatus 23 which may be arranged on the upper side of the conveying member 9. Next to this spraying apparatus 23, on the lower side of the conveying member 9, there may also be arranged a cleaning member 24 for the rollers.

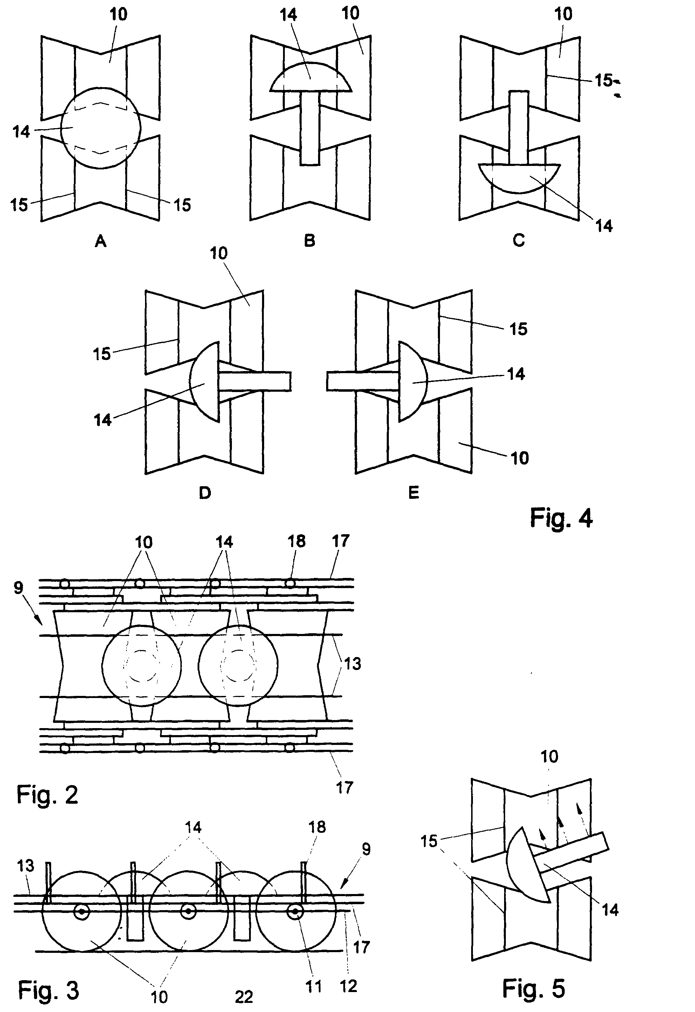

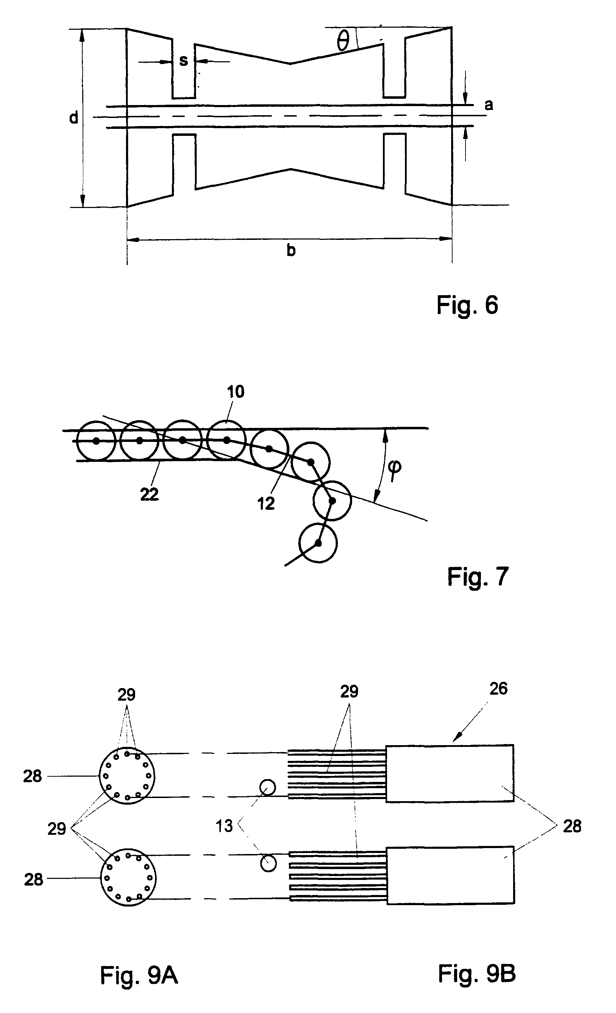

The orientation mechanism 2 further comprises mushroom carriers in the form of two mutually parallel ropes 13. The interspace between these ropes is such that the mushrooms are carried by the ropes on two sides while suspending from their caps and with their stipes falling therebetween, as is clearly demonstrated in Figs. 2 and 3, where the mushrooms are designated by reference numeral 14. At a particular distance from their two side faces, the hourglass-shaped rollers 10 are provided with circular slots or grooves 15. Through these slots or grooves 15, the ropes 13 extend. The depth of these grooves is such that the mushrooms, during the orientation thereof, are not obstructed by the ropes. For this purpose, the shaft of the hourglass-shaped rollers 10 will have a relatively small diameter; indeed, this precisely allows the slots or grooves to be provided at such a depth that said obstruction of the orientation of the mushrooms is avoided. In this connection, reference be made to a dimensioning of the hourglass-shaped rollers that has proved to be favorable in practice, as indicated in Fig. 6. At their lateral surfaces, the hourglass-shaped rollers have a diameter *d* of from 75 to 130 mm, a length *b* of from 75 to 100 mm, a shaft diameter *a* of from 6 to 15 mm, a width of the slots or grooves of from 5 to 15 mm, while the surface of the hourglass-shaped roller extends at an angle θ of from 15 to 30°. Extending in the slots or grooves are round ropes having a diameter of from 4 to 12 mm. This dimensioning is adjusted to mushrooms having a cap diameter to the order of magnitude of from 60 to 75 mm. It will be understood that for other mushroom sizes, differently dimensioned hourglass-shaped rollers will be employed.

The ropes 13 do not only extend within the range of the rollers 10, but in the embodiment shown in Fig. 1 also constitute the carriers of the mushrooms outside this range. As indicated in Fig. 1, the ropes constitute the carriers of mushrooms that have not yet been oriented, coming from the conveyor 8 before the ropes engage the rollers 10 of the conveying member 9. Likewise, they constitute the carriers of the oriented mushrooms after the ropes are released from the grooves 15 in the rollers 10. In practice, this release proves to proceed particularly efficiently when the angle ϕ at which the rollers run away from the ropes is in the order of from 10 to 40°, in particular about 20°, see Fig. 7.

It will be understood that, different from this specific embodiment, it is also possible to transfer the mushrooms directly from the conveyor 8 onto the rollers 10.

In the embodiment shown, the ropes 13 also constitute the mushroom carriers in the inspection and cutting members 3 and 4 respectively. To this end, the ropes 13 are provided for motor drive over the rollers 16 upstream of the inlet side of the orientation mechanism 2 and downstream of the cutting member 4. The ropes 13 are driven in the conveying direction at a velocity greater than or equal to the velocity of the train of rollers; preferably, however, the rope velocity is slightly greater than that of the train of rollers in the conveying direction. In relation to the peripheral velocity of the rollers, the rope velocity is selected so that the rolling motion of the rollers during travel of the rollers and ropes in the conveying direction provides a stable orientation of the mushrooms, while the number of mushrooms to be oriented per unit of time is yet sufficiently large.

The mushrooms taken over from the conveyor 8 are received on the ropes 13 and when the ropes come within the range of the rollers, they will, due to their specific shape and rolling behavior, be rotated on the rollers 10 so that they adopt specific preferred positions. These preferred positions are indicated in Figs. 4A through 4E. In the positions indicated in Figs. 4A, 4B and 4C, the mushrooms are oriented in a desired manner. Problems occur when the mushrooms assume the positions indicated in Figs. 4D and 4E. Because of the rotational movement of the rollers, the mushrooms will then start rotating about their own longitudinal axes and remain in this undesired position. When the mushrooms end up on the rollers in a random position, they will adopt one of said preferred positions, due to the rolling movement of the rollers 10 and their own rolling behavior. If a mushroom falls onto the rollers in the position indicated in Fig. 5, the force acting on the stipe of the mushroom (indicated by arrows in Fig. 5), brought about by the rolling movement of the hourglass-shaped rollers 10, will cause the mushroom to end up in one of the preferred positions indicated in Figs. 4A, 4B and 4C. This will depend on the length of the stipe and the friction between the mushroom and the hourglass-shaped rollers. In the positions shown in Figs. 4D and 4E, the stipe of the mushroom projects. This projection provides the possibility of causing an additional force to act on the mushroom. This force is exerted by tilting members especially arranged for that purpose, in the form of tilting belts 17 and upright elements 18 mounted thereon, which upright elements have such a length that they project above the hourglass-shaped rollers. By providing the tilting members on either side of the roller train and, moreover, moving them at a velocity which is either greater or less than that of the roller train, the effect achieved is that the upright elements 18 come into contact with the projecting mushroom stipes and give them such a push in the direction of travel and the rotational direction of the rollers, that they will commonly end up in one of the preferred positions of Fig. 4A, 4B or 4C. The difference in velocity between the tilting members and the roller train is preferably between 10 and 40%; it must not be so small that the tilting members are almost stationary relative to the roller train, because obstructions may otherwise occur. Preferably, the distance between the upright elements is selected so that it approximately corresponds to the distance between the shafts of the rollers 10.

Fig. 1 indicates how the mushrooms, vertically oriented and resting on the ropes 13, are fed to the inspection member 3. By means of a detector 19 provided therein, it is determined whether the stipes of the mushrooms are too long and/or have a sandy base. If this should be the case, a part of the stipe is cut off in the cutting member 4. This cutting member 4 is formed by two partially overlapping, serrated or toothed, motor-driven circular disk-shaped cutters 25. The cutters 25 are driven so that their peripheral velocity is higher than the speed of travel of the ropes 13. The cut-off stipe parts are collected on a conveyor or in a tray 20, while the mushrooms whose stipe appearance and length meet the set requirements are taken over by a discharging member 5 formed by a conveyor belt 21 perpendicular to the plane of the drawing. When several rope pairs are in close side by side arrangement, the cutter pairs may be staggered in the conveying direction.

Because in practice, it has turned out that in the above-described manner, the percentage of mushrooms that are oriented does not always meet the set requirements, a pair of brush-shaped elements 26 is provided between the endless conveying member 9 and the cutting member 4, directly above (for instance about 2.5 mm above) in each case one carrier, i.e. in each case above two ropes 13, while further, between the conveying member 9 and the pair of brush-shaped elements 26, on either side of the ropes, tilting pins 27 are provided. This arrangement is shown in Figs. 1 and 8, Fig. 8 being a top plan view of that portion of a carrier where the brush-shaped elements 26 and the tilting pins 27 are disposed. The brush-shaped elements 26 are formed by a holder 28 having downwardly directed hair bundles 29 at right angles to the plane through the ropes 13 (see Figs. 9A and 9B). In this exemplary embodiment, per brush-shaped element 26, twelve hair bundles are present, arranged in approximately a square for obtaining a better grip of the mushrooms to be fed. Other numbers of hair bundles are of course also possible. The peripheral velocity of the brush-shaped elements is 2-10% higher than the speed of travel of the ropes 13. The brush-shaped elements rotate towards one another in the conveying direction. For, for instance, mushrooms having a cap diameter of 40-50 mm, the brush-shaped elements will have a section of about 23 mm, while their center-to-center distance will then be, for instance, 36 mm, hence less than the cap diameter of the mushrooms. This distance will in fact depend on the stiffness of the hairs of the brush-shaped elements. The distance *a* (Fig. 1) between the brush-shaped elements 26 and the cutting member 4 is in the order of 30 cm; this distance should at any rate be so great that mushrooms that have passed the brush-shaped elements 26 have entirely come to rest before they are subjected to a cutting treatment. Here, the distance *b* between the plane V, i.e. the place where the ropes 13 are released from the conveying member 9, and the brush-shaped elements is, for instance, about 15 cm, but will actually depend on, inter alia, the question whether the tilting pins are juxtaposed or staggered relative to one another.

As mentioned, between the plane V where the mushrooms are released from the conveying member 9, and the brush-shaped elements 26, tilting pins 27 are arranged on either side of the ropes 13. In Figs. 1 and 8, these pins 27 are staggered. The pins 27 incline upwards in the conveying direction.

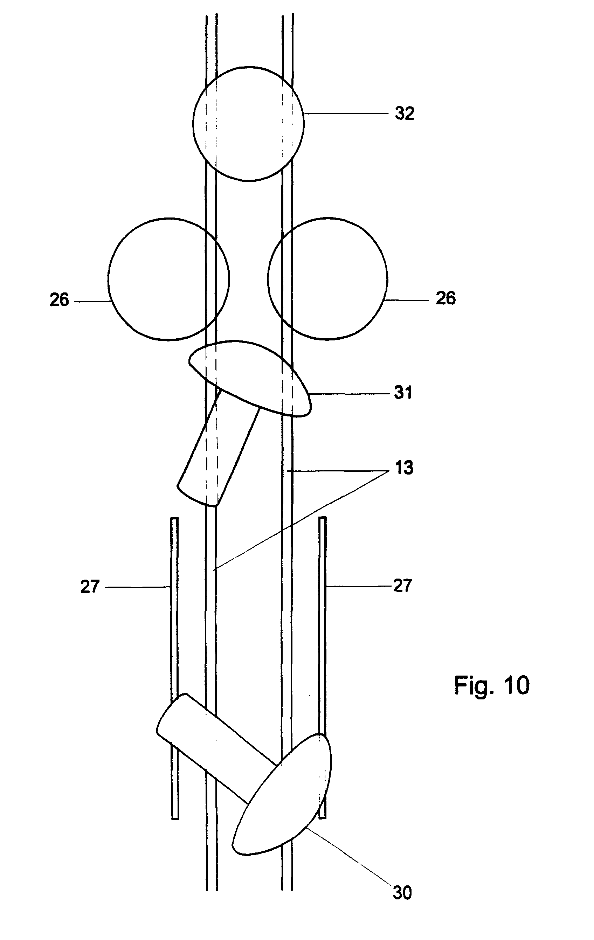

Fig. 10 shows the portion of the ropes 13 above which the brush-shaped elements 26 and next to which the tilting pins 27 are provided, with mushrooms 30, 31 and 32 on the ropes. The tilting pins are in side by side arrangement. Apparently, mushroom 30 is not oriented in the desired manner by the hourglass-shaped rollers. Due to the upwardly inclined tilting pins 27, this mushroom can be moved into a position like mushroom 31. The latter can then, after passing the brush-shaped elements 26, come into the position of mushroom 32 and hence be oriented in the desired manner. In other words, by the brush-shaped elements, preferably together with the tilting pins, the stipes of the mushrooms are centered so that they fall down between the ropes and the mushrooms remain resting with their caps on the ropes.

The invention is not limited to the embodiment shown here, which is specifically adapted to the processing of mushrooms. The underlying inventive concept may also be applied to other natural products, such as onions, pears, flower bulbs or all sorts of synthetically manufactured products, as long as these products have a specific shape, i.e. a shape that is eligible for orientation. These may also be elongated objects, such as carrots, heads of chicory, and the like. The surface of the products must be such that they can undergo a rotational movement on the rollers 10 so as to be oriented in a preferred direction.

## Claims

1. An orientation mechanism, in particular for orienting objects whose surface comprises at least a concave portion and at least a projecting or bulging portion, such as mushrooms, pears, onions, flower bulbs and the like, provided with an endless conveying member, comprising a number of mutually adjacent conveying elements formed by rollers arranged transversely to the conveying direction, spaced apart a specific distance one behind the other and movable in the conveying direction, which can be moved so that objects placed on the conveying member can be oriented, while, further, motor-driven carriers are present for supporting objects oriented and to be oriented, **characterized in that** in the conveying direction, outside the range of the conveying member, one or more groups of two brush-shaped elements are present above the carriers, wherebetween the objects can be moved, in contact therewith.

2. An orientation mechanism according to claim 1, **characterized in that** a carrier is formed by a pair of ropes, belts or the like that are movable in the conveying direction and wherebetween the objects in suspended position can be supported and the brush-shaped elements being arranged on either side of the ropes, belts or the like, spaced apart a distance which is less than the largest diameter of the objects.

3. An orientation mechanism according to claim 1 or 2, **characterized in that** for several carriers, juxtaposed groups of brush-shaped elements are staggered in the conveying direction.

4. An orientation mechanism according to any one of the preceding claims, **characterized in that** the brush-shaped elements are motor-drivable and have a peripheral velocity which is 2-10% higher than the speed of travel of the carriers.

5. An orientation mechanism according to any one of the preceding claims, **characterized in that** tilting pins are arranged on either side of a carrier, in the conveying direction upstream of the brush-shaped elements.

6. An orientation mechanism according to claim 5, **characterized in that** a tilting pin is inclined upwards in the conveying direction.

7. An orientation mechanism according to claim 5 or 6, **characterized in that** the distance between an end of the tilting pins and the brush-shaped elements is greater than the largest diameter of the objects.

8. An orientation mechanism according to any one of claims 5-7, **characterized in that** the tilting pins are staggered in the conveying direction.

9. An orientation mechanism according to any one of the preceding claims, **characterized in that** a cutting member is provided in the conveying direction following the brush-shaped elements, for cutting off portions of the oriented objects which project downwards too far.

10. An orientation mechanism according to claim 9, **characterized in that** the distance between the brush-shaped elements and the cutting member is such that the objects oriented by the brush-shaped elements have come to a resting position on a carrier, before they are subjected to a cutting treatment.

11. An orientation mechanism according to claim 10, **characterized in that** the cutting member is formed by two partially overlapping, serrated or toothed, motor-driven circular disk-shaped cutters.

12. An orientation mechanism according to claim 11, **characterized in that** the cutters are driven so that their peripheral velocity is higher than the speed of travel of the carriers.

## Patentansprüche

1. Ausrichtmechanismus, insbesondere zum Ausrichten von Objekten, deren Oberfläche wenigstens einen konkaven Bereich und wenigstens einen vorstehenden oder vorgewölbten Bereich umfasst, wie etwa Pilze, Birnen, Zwiebeln, Blumenzwiebeln und dergleichen, wobei der Ausrichtmechnismus mit einer endlosen Fördereinrichtung versehen ist, die eine Anzahl von einander benachbarten Förderelementen aufweist, die durch in Querrichtung zu der Förderrichtung angeordnete, um einen bestimmten Abstand eine hinter der anderen beabstandet angeordnete Rollen gebildet sind und in der Förderrichtung beweglich sind, und die bewegt werden kann, so dass auf der Fördereinrichhtung platzierte Objekte ausgerichtet werden können, während ferner motorgetriebene Träger vorhanden sind, um die ausgerichteten und auszurichtenden Objekte zu tragen, **dadurch gekennzeichnet, dass** in der Förderrichtung, außerhalb der Reichweite der Fördereinrichtung ein oder mehrere Gruppen von bürstenförmigen Elementen oberhalb der Träger vorhanden sind, zwischen denen die Objekte in Kontakt damit bewegt werden können.

2. Ausrichtmechanismus nach Anspruch 1, **dadurch gekennzeichnet, dass** ein Träger durch ein Paar von Seilen, Riemen oder dergleichen gebildet ist, die in Förderrichtung beweglich sind und zwischen denen die Objekte in aufgehängter Position getragen werden können, und wobei die bürstenförmigen Elemente auf einer Seite der Seile, Gurte oder dergleichen, in einem Abstand zueinander angeordnet sind, der kleiner als der größte Durchmesser der Objekte ist.

3. Ausrichtmechanismus nach Anspruch 1 oder 2, **dadurch gekennzeichnet, dass** für eine Mehrzahl von Trägern nebenanderliegende Gruppen von bürstenförmigen Elementen in der Förderrichtung zueinander versetzt angeordnet sind.

4. Ausrichtmechanismus nach einem der vorhergehenden Ansprüche, **dadurch gekennzeichnet, dass** die bürstenförmigen Elemente mit einem Motor antreibbar sind und eine Umfangsgeschwindigkeit haben, die um 2 bis 10% höher als die Bewegungsgeschwindigkeit der Träger ist.

5. Ausrichmechanismus nach einem der vorhergehenden Ansprüche, **dadurch gekennzeichnet, dass** auf einer Seite eines Trägers Kippstifte angeordnet sind, die in der Förderrichtung stromaufwärts der bürstenförmigen Elemente liegen.

6. Ausrichtmechanismus nach Anspruch 5, **dadurch gekennzeichnet, dass** ein Kippstift in der Förderrichtung nach oben geneigt ist.

7. Ausrichtmechanismus nach Anspruch 5 oder 6, **dadurch gekennzeichnet, dass** der Abstand zwischen einem Ende der Kippstifte und den bürstenförmigen Elementen größer als der größte Durchmesser der Objekte ist.

8. Ausrichtmechanismus nach einem der Ansprüche 5 bis 7, **dadurch gekennzeichnet, dass** die Kippstifte in der Förderrichtung versetzt zueinander angeordnet sind.

9. Ausrichtmechanismus nach einem der vorhergehenden Ansprüche, **dadurch gekennzeichnet, dass** eine Schneideinrichtung in der Bewegungsrichtung folgend auf die bürstenförmigen Elemente vorgesehen ist, um Teile der ausgerichteten Objekte abzuschneiden, die zu weit nach unten hervorragen.

10. Ausrichtmechnismus nach Anspruch 9, **dadurch gekennzeichnet, dass** der Abstand zwischen den bürstenförmigen Elementen und der Schneideinrichtung so ist, dass die durch die bürstenförmigen Elemente ausgerichteten Objekte in eine Ruhelage auf dem Träger kommen, bevor sie einer Schneidbehandlung unterzogen werden.

11. Ausrichtmechanismus nach Anspruch 10, **dadurch gekennzeichnet, dass** die Schneideinrichtung durch zwei teilweise überlappende, sägeartige oder mit Zähnen versehene, motorgetriebene kreisförmige Scheibenschneider gebildet wird.

12. Ausrichtmechanismus nach Anspruch 11, **dadurch gekennzeichnet, dass** die Schneider so angetrieben werden, dass ihre Umfangsgeschwindigkeit größer als die Bewegungsgeschwindigkeit der Träger ist.

## Revendications

1. Mécanisme d'orientation, en particulier pour orienter des objets dont la surface comprend au moins une partie concave et au moins une partie saillante ou renflée, tels que des champignons, poires, oignons, bulbes à fleurs ou similaires, pourvu d'un dispositif de transport continu comportant une pluralité d'éléments de transport mutuellement adjacents formés par des rouleaux agencés transversalement à la direction de transport, espacés les uns des autres d'une distance spécifique et mobiles dans le sens de transport, lesdits rouleaux pouvant être déplacés de manière à ce que des objets placés sur le dispositif de transport puissent être orientés et des supports entraînés par moteur étant également présents pour porter les objets orientés et à orienter, **caractérisé en ce que**, dans le sens de transport, hors de la zone du dispositif de transport, il est prévu au-dessus des supports un ou plusieurs groupes de deux éléments en forme de brosse, entre lesquels et au contact desquels les objets peuvent être déplacés.

2. Mécanisme d'orientation selon la revendication 1, **caractérisé en ce qu'**un support est formé par une paire de cordes, courroies ou similaires qui sont mobiles dans la direction de transport et entre lesquelles les objets peuvent être suspendus, les éléments en forme de brosse étant agencés de part et d'autre des cordes, courroies ou similaires, espacés entre eux d'une distance inférieure au plus grand diamètre des objets.

3. Mécanisme d'orientation selon la revendication 1 ou 2, **caractérisé en ce que**, en cas de pluralité de supports, des groupes juxtaposés d'éléments en forme de brosse sont décalés dans le sens de transport.

4. Mécanisme d'orientation selon l'une quelconque des revendications précédentes, **caractérisé en ce que** les éléments en forme de brosse peuvent être entraînés par moteur et ont une vitesse périphérique 2 à 10 % supérieure à la vitesse de déplacement des supports.

5. Mécanisme d'orientation selon l'une quelconque des revendications précédentes, **caractérisé en ce que** les broches d'inclinaison sont agencées de part et d'autre d'un support, en amont des éléments en forme de brosse dans le sens de transport.

6. Mécanisme d'orientation selon la revendication 5, **caractérisé en ce qu'**une broche d'inclinaison est inclinée vers le haut dans le sens de transport.

7. Mécanisme d'orientation selon la revendication 5 ou 6, **caractérisé en ce que** la distance entre une extrémité des broches d'inclinaison et les éléments en forme de brosse est supérieure au plus grand diamètre des objets.

8. Mécanisme d'orientation selon l'une quelconque des revendications 5 à 7, **caractérisé en ce que** les broches d'inclinaison sont décalées dans le sens de transport.

9. Mécanisme d'orientation selon l'une quelconque des revendications précédentes, **caractérisé en ce qu'**un dispositif de coupe est prévu en aval des éléments en forme de brosse dans le sens de transport pour couper les parties des objets orientés qui dépassent trop vers le bas.

10. Mécanisme d'orientation selon la revendication 9, **caractérisé en ce que** la distance entre les éléments en forme de brosse et le dispositif de coupe est telle que les objets orientés par les éléments en forme de brosse sont parvenus à une position de repos sur un support avant d'être soumis à un traitement de coupe.

11. Mécanisme d'orientation selon la revendication 10, **caractérisé en ce que** le dispositif de coupe est formé de deux couteaux circulaires entraînés par moteur, dentelés ou dentés, se chevauchant partiellement.

12. Mécanisme d'orientation selon la revendication 11, **caractérisé en ce que** les couteaux sont entraînés de sorte que leur vitesse périphérique soit supérieure à la vitesse de déplacement des supports.
